# EUROPÄISCHE PATENTSCHRIFT

(11) **EP 1 127 932 B1**
(45) Veröffentlichungstag und Bekanntmachung des Hinweises auf die Patenterteilung: **11.08.2004**
(21) Anmeldenummer: 01102756.2
(22) Anmeldetag: 08.02.2001
(51) Int. Cl.: C09J 133/06, C09J 7/02, C09J 5/06, C08J 3/24, C08F 8/00

(54) **Strukturierte UV-vernetze Acrylathaftklebemassen**
Structurised UV-crosslinked hot melt acrylic adhesive
Colles à chaud acryliques structurisées, sensibles à la pression et réticulées par UV

(30) Priorität: 25.02.2000 DE 10008840
(43) Veröffentlichungstag der Anmeldung: 29.08.2001
(73) Patentinhaber: Tesa AG, 20253 Hamburg (DE)
(72) Erfinder: Husemann, Marc, Dr., 22605 Hamburg (DE); Zöllner, Stephan, Dr., 22043 Hamburg (DE)

(56) Entgegenhaltungen:
- EP-A- 0 594 109
- EP-A- 0 660 187
- WO-A-92/15394
- US-A- 4 900 624

## Beschreibung

Die Erfindung betrifft durch selektive UV-Bestrahlung Vernetzte strukturierte Polyacrylate, deren Verwendung sowie ein Verfahren zu deren Herstellung.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Diese sehr scherfesten und polaren Haftklebemassen besitzen aber den Nachteil, daß sie für den Hotmelt-Extrusionsprozeß nicht gut geeignet sind, da hohe Anwendungstemperaturen erforderlich sind und da außerdem durch Scherung im Extruder das Molekulargewicht des Polymers abgebaut wird. Durch diese Schädigung wird das klebtechnische Niveau deutlich herabgesetzt. Die Klebkraft und die Anfaßklebrigkeit (Tack) sind in der Regel gering, da die Glasübergangstemperatur durch die polaren Anteile in den Klebemassen relativ hoch liegt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Daher werden zur Zeit unterschiedliche Konzepte zur Verringerung der Fließviskosität und damit der leichteren Extrusionsbeschichtung dieser Haftklebemassen untersucht.
In der Technik werden verschiedene Konzepte verfolgt, um dieses Ziel zu erreichen. Eine Möglichkeit dazu ist die sehr effiziente Vernetzung einer niedrigviskosen und unpolaren Acrylatklebemasse erst auf dem Träger. Acrylate mit elektronendrückenden Gruppen werden copolymerisiert und stabilisieren während der UV- oder ESH-Vernetzung (ESH: Elektronenstrahlhärtung) entstehende Radikale. Beispiele hierfür sind tertiäre Amine enthaltende Monomere [W0 96/35725], tertiäres Butylacrylamid als Monomer [US 5,194,455] und die in der EP 0 343 467 B1 zitierten eingesetzten Tetrahydrofurylacrylate. Ein weiteres Konzept der effizienten Vernetzung ist die Copolymerisation von UV-Photoinitiatoren in die Polyacrylatkette. So wurde z.B. Benzoinacrylat als Comonomer eingesetzt und die Vernetzung auf dem Träger mit UV-Licht durchgeführt [DE 27 43 979 A1]. In der US 5,073,611 wurden dagegen Benzophenon und Acetophen als copolymerisierbare Monomere verwendet.

Eine vollkommen neue Methode kommt aus der Chipherstellung. Durch Zusatz eines Photokationeninitiators und UV-Lichtbestrahlung werden Polymere mit Ester-Funktionen entschützt und freie Carbonsäuren oder Hydroxyfunktionen generiert. Diese Methode wurde in der US 4,491,628 beschrieben. Neuere Entwicklungen beschäftigen sich mit der Veränderung der UV-Licht-Wellenlänge auf 193 nm [US 5,910,392] und mit der Verbesserung der Auflösung [US 5,861,231; US 4,968,581; US 4,883,740; US 4,810,613; US 4,491,628].

Aufgabe der Erfindung ist es, ein Polyacrylat zur Verfügung zu stellen, dessen Zwischenprodukte während der Herstellung sich durch eine niedrige Viskosität und damit eine gute Verarbeitbarkeit im Hotmelt-Prozeß auszeichnet, und welches erst nach der Verarbeitung, z. B. in einem Hotmelt-Prozeß, in eine hochscherfeste Masse überführt wird. Durch geeignete Wahl der Reaktionsparameter während der Umwandlungsreaktion sollen sich dabei die physikalischen Eigenschaften des Polymers einstellen lassen. Die die Umwandlung verursachende Reaktion soll durchgeführt werden können, wenn die Polymermasse bereits in ihrer endgültigen Form, z.B. aufgetragen als Klebmasse auf einem Träger, vorliegt.

Durch die Einführung von Oberflächenstrukturen in die Acrylathaftklebemassen (Einführung von polaren neben unpolaren Bereichen) während der UV-Bestrahlung sollen die klebetechnischen Eigenschaften der Acrylathaftklebemassen zusätzlich verbessert werden, insbesondere sollen die Klebkraft und der Tack in bezug auf die einheitlichen Polyacrylatmischungen verbessert werden. Ziel der Erfindung ist daher die Erzeugung von Hartsegmenten durch die UV-initiierte Entschützungsreaktion von tert.-Butylacrylat zur freien Carbonsäure durch selektive UV-Bestrahlung durch eine Maske.

Gelöst wird diese Aufgabe durch ein Polyacrylat gemäß dem Hauptanspruch. Die Unteransprüche betreffen vorteilhafte Weiterbildungen der Erfindung sowie ein Verfahren zur Herstellung des Polyacrylates sowie dessen Verwendung.

Demgemäß beinhaltet die Erfindung strukturierte Polyacrylate, die durch UV-Bestrahlung hervorgerufene Vernetzung eines Polymergemisches aus den folgenden Komponenten
a) Polyacrylatcopolymere aus den folgenden Monomeren
   a1) Acrylsäure und/oder Acrylsäureester der folgenden Formel

      CH₂ = CH(R¹)(COOR²),

      wobei R¹ = H oder CH₃ und R² eine Alkylkette mit 1 - 20 C-Atomen ist,
      zu 70 - 99 Gew.-%, bezogen auf Komponente (a),
   a2) olefinisch ungesättigte Monomere mit funktionellen Gruppen,
      zu 0 - 15 Gew.-%, bezogen auf Komponente (a),
   a3) tert.-Butylacrylat, und
      zu 1 - 15 Gew.-%, bezogen auf Komponente (a), und
b) einem Photokationenerzeuger.
   zu 0.01 - 25 Gew.-%, bezogen auf die Gesamt-Polymermischung, hergestellt werden können, wobei die Strukturierung der Polyacrylate darin besteht, daß in den Polyacrylaten Bereiche hoher Vernetzung neben Bereichen geringer Vernetzung und/oder unvernetzten Bereichen vorliegen.
   Besonders vorteilhaft ist es, wenn Komponente (a1) zu 85 - 89 Gew.-%, bezogen auf Komponente (a), und/oder Komponente (a2) zu 4 - 6 Gew.-%, bezogen auf Komponente (a), und/oder Komponente (a3) zu 7 - 9 Gew.-%, bezogen auf Komponente (a), vorliegen.
   Sehr vorteilhaft ist es, eine Polymermischung einzusetzen, der bis zu 3 Gew.-%, bezogen auf die Gesamt-Polymermischung, eines
c) bi- oder multifunktionellen Vernetzers zugesetzt wird.

Als Vernetzer lassen sich hier alle bi- oder multifunktionellen Verbindungen einsetzen, deren funktionelle Gruppen mit den Polyacrylaten eine Verknüpfungsreaktion eingehen können, insbesondere Polymerisations-, Polykondensations- oder Polyadditionsreaktionen. Bevorzugt werden diese Reaktionen an einer Carboxylgruppe angreifen. Als Vernetzer sind insbesondere Epoxide oder Isocyanate mit mindestens zwei funktionellen Gruppen, aber auch alle anderen mit Carboxylgruppen reagierenden Verbindungen geeignet. Eingesetzt werden können hierfür auch Metall-Chelat-Verbindungen.

Ein Verfahren zur Herstellung von strukturierten Polyacrylaten durch strukturierte Vernetzung von Polyacrylatmischungen zeichnet sich dadurch aus, daß die Basispolymer mischung durch derart mit ultraviolettem Licht bestrahlt wird, daß nur bestimmte Bereiche der Polymermischung der UV-Strahlung ausgesetzt sind.

Das Verfahren zur Herstellung läßt sich im Besonderen derart durchführen, daß die Basispolymermischung durch eine Lochmaske derart mit ultraviolettem Licht bestrahlt wird, daß nur bestimmte Bereiche der Polymermischung der UV-Strahlung ausgesetzt sind.

Alternativ läßt sich die Strukturierung des zu härtenden Polymergemisches dadurch erzielen, daß statt der Lochmaske eine Folie, welche in der Fläche Bereiche unterschiedlicher UV-Licht-Durchlässigkeit aufweist, verwendet wird, so daß bestimmte Bereiche der Polymermischung unterschiedlichen Intensitäten der UV-Strahlung ausgesetzt sind.

Inhalt der Erfindung ist weiterhin die Verwendung des Polyacrylates als Haftklebemasse, insbesondere die Verwendung als Haftklebemasse für ein Klebeband, wobei die Acrylathaftklebemasse als ein- oder doppelseitiger Film auf einer Trägerfolie vorliegt.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Gewebe und Gewebefolien sowie gegebenenfalls Trennpapier verwenden. Diese Aufzählung soll nicht abschließend sein.

Die dargestellte Erfindung ermöglicht es in hervorragender Weise, die gestellten Aufgaben zu lösen. Es wird ein Polymergemisch vorgestellt, welches während der Verarbeitung niedrigviskos vorliegt und in welchem durch Umwandlung von nichtpolaren in polare Gruppen die Scherfestigkeit erhöht werden kann, nachdem es beispielsweise auf einen Träger aufgebracht wurde. Die Fließviskosität der Ausgangspolyacrylate ist sehr niedrig und eignet sich daher sehr gut zum Beispiel für den Hotmelt-Prozeß. Durch selektive Umwandlung der Gruppen lassen sich polare neben nichtpolaren Segmenten erzeugen, was zu einer Verbesserung der Klebeeigenschaften des Produktes führt.

Die Grundlagen der Erfindung werden im folgenden dargestellt. Die Ausgangspolymere lassen sich durch eine freie radikalische Polymerisation herstellen, ihr Molekulargewicht liegt in der Größenordnung von 1.000.000. Für die Ausgangspolymermischung kann jedes Polymer eingesetzt werden, welches Klebeigenschaften nach dem Handbook of Pressure-sensitive Adhesives, S. 172, §1, 1989 aufweist. Als wesentliche Komponente für die später ablaufende Entschützungsreaktion müssen Polymere zugegen sein, die mit tert.-Butylacrylat als Comonomer hergestellt wurden, da die Überführung der unpolaren in polare Gruppen auf der Ersetzung der tert.-Butylgruppe durch Protonen basiert.

Die chemische Reaktion, die die Umwandlung von unpolaren in polare Haftklebemassen auf dem Träger zur Folge hat, ist eine Entschützung des tert.-Butylacrylates zur freien Carbonsäure in Anwesenheit von Protonen und bereits seit langem bekannt [Loev, Chem. Ind. (London) 193 (1964)].

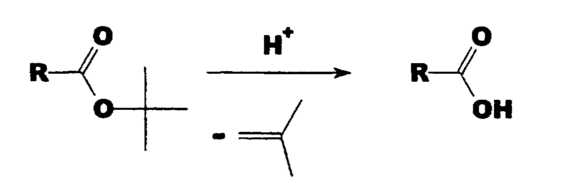

Diese Reaktion wird in der Photoresist-Technik (Photoresists: lichtempfindliche, filmbildende Materialien (Photolacke), deren Löslichkeitsverhalten sich durch Belichtung oder Bestrahlung ändert; bei negativ arbeitenden Photoresists geschieht dies durch Vernetzung oder Photopolymerisation) zur Entschützung von tert.-Butyl-Gruppen eingesetzt. Dort wird die Säure durch die UV-Bestrahlung eines beigemischten Photokationeninitiators hergestellt.
Im Rahmen dieser Erfindung wurde diese Technik auf Haftklebemassen übertragen.

Kationische Photoinitiatoren sind typischerweise Aryldiazoniumsalze ("Oniumsalze"), die sich allgemein durch die Formel Ar-N=N⁺ LX⁻ darstellen lassen, wobei LX⁻ ein Addukt einer Lewissäure L und einer Lewisbase X- ist. Besonders vorteilhaft sind BF₄⁻, SbF₅⁻, AsF₅⁻, PF₅⁻, SO₃CF₂⁻ für LX⁻. Unter UV-Strahlungseinfluß kommt es zu einer schnellen Molekülspaltung in das Arylhalogenid (ArX), Stickstoff sowie die entsprechende Lewissäure.
Auch Diaryliodoniumsalze (C₆H₅)₂I⁺ LX⁻ und Triarylsulfoniumsalze (C₆H₅)₃S⁺ LX⁻ sind für die Anwendung als kationische Photoinitiatoren bekannt; diese bilden in Gegenwart von Protonendonatoren starke (Brönstedt-)Säuren, welche ebenfalls für die Initiierung von kationischen Polymerisationen gut geeignet sind.
Sulfoniumsalze als Kationen-Photoinitiatoren liegen beispielsweise auch in Form der Verbindungen H₅C₆-CO-CH₂-S⁺ LX⁻ oder H₅C₆-CO-CH₂-Pyr⁺ LX⁻, wobei Pyr ein stickstoffhaltiges heteroaromatisches System (z.B. Pyridin, Pyrimidin) darstellt, vor.

Für die dargestellte Vernetzungsreaktion werden die dem Fachmann geläufigen Photokationeninitiatoren, vorzugsweise einer derjenigen Initiatoren aus der im vorstehenden Abschnitt dargestellten Gruppe, verwendet.

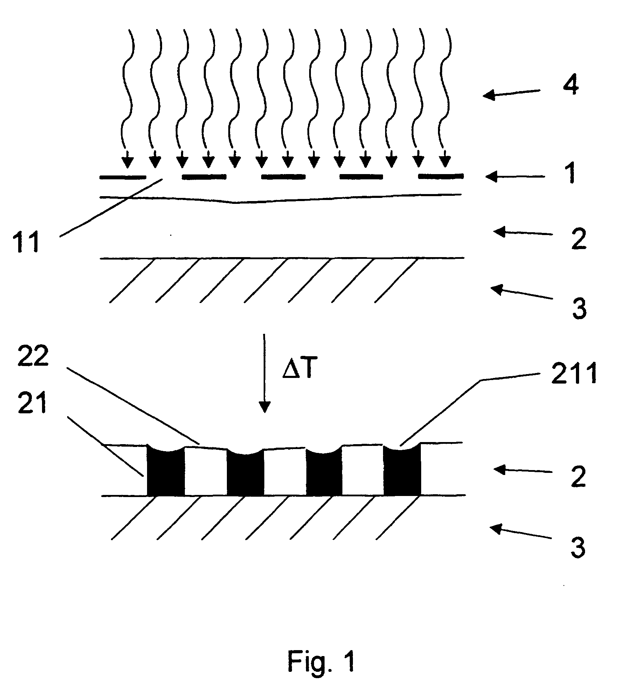

Durch die Verwendung einer Photomaske kann an den UV-bestrahlten Stellen gezielt tert.-Butylacrylat zur freien Carbonsäure umgesetzt werden. In Figur 1 ist das Prinzip der selektiven Bestrahlung anhand einer Skizze veranschaulicht.

In der Figur wird die Bestrahlung der Acrylatmasse (2) durch eine Lochmaske (1) dargestellt, wobei sich die Acrylatmasse (2) auf dem Träger (3) befindet. Der Acrylatmasse (2) ist gemäß dem Hauptanspruch ein Photokationeninitiator beigemischt, der durch UV-Licht (4) und bei hohen Temperaturen (ΔT) eine teilweise Überführung von unpolaren Säurederivatgruppen (z.B. Estergruppen) des Polymers (2) in polare Acrylsäuregruppen initiiert. Die ultravioletten Strahlen (4) können die Maske (1) nur im Bereich der Löcher (11) durchdringen, so daß sich nach der Bestrahlung die im unteren Teil der Abbildung dargestellte Situation ergibt: Die Haftklebemasse (2) weist aufgrund von Wasserstoffbrückenbindungen zwischen den polaren Säuregruppen harte Segmente hoher Vernetzung (21) neben unvernetzten Segmenten (22) (unpolare Bereiche) auf.

Die Polymerketten an den Rändern der harten Bereiche reichen in die weichen Bereiche hinein, die harten und in sich hochviskosen Bereiche sind somit mit den weichen Bereichen verknüpft und behindern diese daher in ihrer Beweglichkeit, so daß die strukturelle Festigkeit der Klebmasse erhöht wird. Diese harten Segmente erhöhen zudem die Kohäsion der Haftklebemasse. Dagegen bewirken die weichen Segmente ein leichteres Auffließen der Klebemasse auf dem Substrat und erhöhen somit die Klebkraft und die Haftklebrigkeit (Tack). Einen großen Einfluß auf die klebtechnischen Eigenschaften hat der prozentuale Anteil der bestrahlten Fläche sowie die Größe der erzeugten Segmente.

Je nach Anteil tert.-Butylacrylat im Polymer wird durch die UV-Bestrahlung eine entsprechende Menge Polyacrylsäure generiert, die die Glasübergangstemperatur T_{G} an den bestrahlten Stellen ansteigen läßt. Die T_{G} steigt stark an, was sich in der oben erwähnten Härte der entsprechenden Segmente zeigt. Diese harten Segmente erhöhen die Scherfestigkeit der Klebemasse.

Ein weiterer Effekt der UV-aktivierten Entschützungsreaktion ist das Freisetzen von Isobuten-Gas. Durch diese Reaktion verringert sich das Molekulargewicht der vernetzten Bereiche (21) der Haftklebemasse (2) und man beobachtet eine Volumenkontraktion (211). Die Schichtdicke der Acrylathaftklebemasse (2) wird an den bestrahlten Stellen (21) geringer; dadurch verändern sich die Oberflächentopograhie der Haftklebemasse (2) und somit auch die klebetechnischen Eigenschaften. Die kontrahierten Bereiche (211) weisen eine mit Saugnäpfen vergleichbare Eigenschaft auf, so daß die Klebkraft der Acrylathaftklebemasse (2) aufgrund dieses "Saugnapf"-Effektes verbessert wird.

Die weichen Segmente (22) bewirken ein leichteres Auffließen der Klebemasse auf dem Substrat und erhöhen somit ebenfalls die Klebkraft und die Haftklebrigkeit (Tack). Einen großen Einfluß auf die klebtechnischen Eigenschaften hat der prozentuale Anteil der bestrahlten Fläche sowie die Größe der erzeugten Segmente.

### Beispiele

Die folgenden beispielhaften Experimente sollen den Inhalt der Erfindung näher erläutem, ohne durch die Wahl der Beispiele die Erfindung unnötig einschränken zu wollen.

### Testmethoden

Zur Charakterisierung der Polyacrylatmassen und deren vernetzter Produkte dienten die im folgenden dargestellten Testmethoden:

### Scherfestigkeit (Test A1, A2, A3)

Ein 13 mm breiter Streifen des Klebebandes wurde auf eine glatte und gereinigte Stahloberfläche aufgebracht. Die Auftragsfläche betrug 20 mm × 13 mm (Länge × Breite). Anschließend wurde wie folgt vorgegangen:
Test A1: Bei Raumtemperatur wurde ein 1 kg-Gewicht an dem Klebeband befestigt und die Zeit bis zum Abfallen des Gewichtes gemessen.
Test A2: Bei 70 °C wurde ein 0,5 kg-Gewicht an dem Klebeband befestigt und die Zeit bis zum Abfallen des Gewichtes gemessen .
Test A3: Bei 80 °C wurde ein 1 kg-Gewicht an dem Klebeband befestigt und die Zeit bis zum Abfallen des Gewichtes gemessen.
Die gemessenen Scherstandzeiten sind jeweils in Minuten angegeben und entsprechen dem Mittelwert aus drei Messungen.

### Dynamisch-Mechanische Analyse, DMA (Test B)

Die Messungen wurden mit dem Gerät Dynamic Stress Rheometer von Rheometrics durchgeführt. Bei 25 °C wurde der mechanische Verlustfaktor tan 8 in Abhängigkeit der Frequenz in einem Intervall von 0,1 bis 100 rad/s verfolgt. Es wurde mit paralleler Plattenanordnung gemessen.

### IR-Spektroskopie (Test C)

Die Messungen wurden an einem Bruker IFS 45 durchgeführt. Der Anteil der entstehenden Acrylsäure wurde mittels einer Kalibrierkurve quantifiziert

### Rolling-Ball (Test D)

Ein 25 mm breiter Klebestreifen wird mit der zu prüfenden Klebemasseseite auf eine Meßschiene gelegt. Durch Lösen der Sperrvorrichtung rollt eine V2A-Meßkugel mit 11 mm Durchmesser die Rampe hinunter und auf einer waagerechten, mit der Klebemasse beschichteten Massefläche entlang.
Die durchlaufende Distanz auf der Klebstoffschicht in mm dient als Maß für den Tack.

### 180° Klebkrafttest (Test E)

Ein 20 mm breiter Streifen einer auf Polyester als Schicht aufgetragenen Acrylat-Haftklebemasse wurde auf zweimal mit Aceton und einmal mit Isopropanol gereinigten Stahlplatten aufgebracht. Der Haftklebestreifen wurde zweimal mit einem 2-kg-Gewicht auf das Substrat aufgedrückt. Das Klebeband wurde anschließend sofort mit 300 mm/min und im 180°-Winkel vom Substrat abgezogen und die hierzu benötigte Kraft gemessen. Alle Messungen wurden bei Raumtemperatur durchgeführt.
Die Meßergebnisse sind in N/cm angegeben und sind gemittelt aus drei Messungen.

### Masken:

Folgende Siebmasken wurden eingesetzt:

| Maske | Durchlaß | Maschenweite [µm] |
|---|---|---|
| A | 33 % | 60 |
| B | 50 % | 60 |
| C | 60 % | 60 |

### Untersuchte Proben

Die für die Experimente verwendeten Proben wurden wie folgt hergestellt:

Die Polymere wurden konventionell über eine freie radikalische Polymerisation hergestellt; das mittlere Molekulargewicht lag bei etwa 1.000.000. Als zweite Komponente wurde ein UV-Kationenerzeuger beigemischt. Verwendet wurden für photochemisch initiierte Polymerisationen dem Fachmann bekannte Photoinitiatoren.

### Beispiel 1

Ein für radikalische Polymerisationen konventioneller 2 L-Glasreaktor wurde mit 36 g tert.-Butylacrylat, 40 g Methylacrylat, 324 g 2-Ethylhexylacrylat und 266 g Aceton/Isopropanol (97:3) befüllt. Nachdem 45 Minuten lang Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch verdünnt. Nach 36 h Reaktionszeit wurde die Polymerisation abgebrochen und das Reaktionsgefäß auf Raumtemperatur abgekühlt. Anschließend wurde das Polymer auf PET-Folie bzw. Trennpapier mit 50 g/m² aufgetragen, mit Elektronenstrahlen gehärtet und anschließend klebetechnisch mit Test A, B und D geprüft.

### Beispiel 1c

Es wurde analog Beispiel 1 vorgegangen. 400 g der Klebmasse 1 (50 %ige Lösung) wurden mit 17,8 g Triarylsulfoniumhexafluorophosphat (Cyracure UVI-6990 ® [UNION CARBIDE]; 50 %ige Lösung) gemischt und homogenisiert.

### Beispiel 2

Es wurde analog Beispiel 1 vorgegangen. Zur Polymerisation wurden 20 g tert.-Butylacrylat, 80 g Methylacrylat und 300 g 2-Ethylhexylacrylat eingesetzt. Die Lösungsmittelmengen wurden beibehalten.

### Beispiel 2c

Es wurde analog Beispiel 2 vorgegangen. 400 g der Klebmasse 2 (50 %ige Lösung) wurden mit 9,90 g Triarylsulfoniumhexafluorophosphat (Cyracure UVI-6990 ® [UNION CARBIDE]; 50 %ige Lösung) gemischt und homogenisiert.

### Beispiel 3

Es wurde analog Beispiel 1 vorgegangen. Zur Polymerisation wurden 40 g tert.-Butylacrylat und 360 g n-Butylacrylat eingesetzt. Die Lösungsmittelmengen wurden beibehalten.

### Beispiel 3a

400 g der Klebemasse 3 (50 %ige Lösung) wurden mit 6,60 g (5 Molprozent) Triarylsulfoniumhexafluorophosphat (Cyracure UVI-6990 ® [UNION CARBIDE]; 50 %ige Lösung) gemischt. Nach der Homogenisierung wurde die Klebemassen auf Trennpapier ausgestrichen, 30 Sekunden mit UV-Licht bestrahlt und 10 Minuten bei 120 °C temperiert. Zur UV-Bestrahlung wurde der Xenon-Chlorid-Strahler (VIB 308 Bulb [FUSION]) eingesetzt. Der Anteil Polyacrylsäure wurde mit Test C ermittelt.

### Beispiel 3b

Es wurde analog Beispiel 3a vorgegangen. Es wurden 400 g der Klebemasse 3 (50 %ige Lösung) mit 12,2 g (10 Molprozent) Triarylsulfoniumhexafluorophosphat (Cyracure UVI-6990 ® [UNION CARBIDE]; 50 %ige Lösung) gemischt.

### Beispiel 3c

Es wurde analog Beispiel 3a vorgegangen. Es wurden 400 g der Klebemasse 3 (50 %ige Lösung) mit 19,8 g (15 Molprozent) Triarylsulfoniumhexafluorophosphat (Cyracure UVI-6990 ® [UNION CARBIDE]; 50 %ige Lösung) gemischt.

### Beispiel 3d

Es wurde analog Beispiel 3a vorgegangen. Es wurden 400 g der Klebemasse 3 (50 %ige Lösung) mit 24,4 g (20 Molprozent) Triarylsulfoniumhexafluorophosphat (Cyracure UVI-6990 ® [UNION CARBIDE]; 50 %ige Lösung) gemischt.

### Beispiel 3e

Es wurde analog Beispiel 3c vorgegangen. Die UV-Belichtungszeit betrug 6 Sekunden.

### Beispiel 3f

Es wurde analog Beispiel 3c vorgegangen. Die UV-Belichtungszeit betrug 18 Sekunden.

### Beispiel 3g

Es wurde analog Beispiel 3c vorgegangen. Die UV-Belichtungszeit betrug 45 Sekunden.

### Beispiel 3h

Es wurde analog Beispiel 3c vorgegangen. Die UV-Belichtungszeit betrug 60 Sekunden.

### Beispiel 3i

Es wurde analog Beispiel 3c vorgegangen. Die UV-Belichtungszeit betrug 90 Sekunden.

### Beispiel 3j

Es wurde analog Beispiel 3c vorgegangen. Das Polyacrylat wurde für 30 Minuten getempert.

### Beispiel 3k

Es wurde analog Beispiel 3c vorgegangen. Das Polyacrylat wurde für 60 Minuten getempert.

### Beispiel 4

Es wurde zunächst analog Beispiel 1 vorgegangen. Ein für radikalische Polymerisationen konventioneller 2 L-Glasreaktor wurde mit 36 g tert.-Butylacrylat, 40 g Methylacrylat, 324 g 2-Ethylhexylacrylat, und 266 g Aceton/Isopropanol (97:3) befüllt. Nach 45 Minuten Durchleitung von Stickstoffgas wurde der Reaktor unter Rühren auf 58 °C hochgeheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol Gemisch verdünnt. Nach 36 h Reaktionszeit wurde die Polymerisation abgebrochen und auf Raumtemperatur abgekühlt. Anschließend wurde das Polymer mit 0,5 % Methylrot oder Methylenblau und 10,6 g (8 Molprozent) Triarylsulfoniumhexafluorophosphat (Cyracure UVI-6990 ® [UNION CARBIDE]; 50 %ige Lösung) gemischt und auf PET-Folie mit 50 g/m² aufgetragen. Die Haftklebemasse wurde mit silikonisierter PET-Folie (10 µm Dicke) abgedeckt, eine Maske aufgelegt und mit UV-Licht einer Wellenlänge von 308 nm bestrahlt.

### Beispiel 5

Es wurde analog Beispiel 4 vorgegangen. Zur Polymerisation wurden 20 g tert.-Butylacrylat, 80 g Methylacrylat und 300 g 2-Ethylhexylacrylat eingesetzt. Die Lösungsmittelmengen wurden beibehalten. Es wurde nur Methylrot als Farbindikator verwendet.

### Beispiel 6

Ein für radikalische Polymerisationen konventioneller 2 L-Glasreaktor wurde mit 20 g tert.-Butylacrylat, 24 g Methylacrylat, 348 g 2-Ethylhexylacrylat, 8 g Acrylsäure und 266 g Aceton/Isopropanol (97:3) befüllt. Nach 45 Minuten Durchleitung von Stickstoffgas wurde der Reaktor unter Rühren auf 58 °C hochgeheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol Gemisch verdünnt. Nach 36 h Reaktionszeit wurde die Polymerisation abgebrochen und auf Raumtemperatur abgekühlt. Anschließend wurde das Polymer auf PET-Folie mit 50 g/m² aufgetragen. Die Klebemasse wurde mit 30 kGy Elektronenstrahlung gehärtet und dann nach Test A, B und D ausgetestet.

### Beispiel 6A

200 g der Klebemasse 6 (50 %ige Lösung) wurden mit 6,6 g (20 % Molprozent) Triarylsulfoniumhexafluorophosphat (Cyracure UVI-6990 ® [UNION CARBIDE]; 50 %ige Lösung) gemischt. Nach der Homogenisierung wurde die Klebemasse auf PET-Folie mit einem üblichen Haftvermittler ausgestrichen, bei 35 °C getrocknet, mit silikonisierter PET-Folie und der Maske A abgedeckt. Die Klebemasse wurde dann durch die Maske mit UV-Licht der Wellenlänge 308 nm (Xenon-Chlorid-Strahler (VIB 308 Bulb [FUSION]) ) bestrahlt, 10 Minuten bei 120 °C temperiert, die Maske und die silikonisierte Folie entfemt, und mit 30 kGy Elektronenstrahlung gehärtet. Anschließend wurde die von oben bestrahlte Seite klebtechnisch mit den Tests A, B und D ausgetestet.

### Beispiel 6B

Es wurde analog Beispiel 6A vorgegangen. Zur UV-Bestrahlung wurde die Maske B verwendet.

### Beispiel 6C

Es wurde analog Beispiel 6A vorgegangen. Zur UV-Bestrahlung wurde die Maske C verwendet.

### Beispiel 6C"

Es wurde analog Beispiel 6C vorgegangen. Die Haftklebemasse wurde mit 18 kGy Elektronenstrahlung gehärtet.

### Beispiel 7

Es wurde analog Beispiel 6 vorgegangen. Als Comonomere wurden 40 g tert.-Butylacrylat, 24 g Methylacrylat, 328 g 2-Ethylhexylacrylat, 8 g Acrylsäure eingesetzt.

### Beispiel 7C

Es wurde analog Beispiel 6A vorgegangen. Zur Abmischung wurde die Klebemasse 7 eingesetzt und zur Bestrahlung die Maske C.

### Beispiel 7C"

Es wurde analog Beispiel 7C vorgegangen. Die Haftklebemasse wurde mit 18 kGy Elektronenstrahlung gehärtet.

### Beispiel 8

Es wurde analog Beispiel 6 vorgegangen. Als Comonomere wurden 60 g tert.-Butylacrylat, 24 g Methylacrylat, 308 g 2-Ethylhexylacrylat, 8 g Acrylsäure eingesetzt.

### Beispiel 8C

Es wurde analog Beispiel 6A vorgegangen. Zur Abmischung wurde die Klebemasse 8 eingesetzt und zur Bestrahlung die Maske C.

### Beispiel 8C"

Es wurde analog Beispiel 8C vorgegangen. Die Haftklebemasse wurde mit 18 kGy Elektronenstrahlung gehärtet.

### Resultate

Ein Träger wurde mit der Acrylathaftklebemasse beschichtet und diese mit UV-Strahlung in verschiedenen Dosen direkt oder durch verschiedene Masken bestrahlt. Bei 120 °C oder 140 °C wurde die Entschützungsreaktion durchgeführt. Durch die Wahl der Temperatur und der Energiedosis läßt sich der Umsatz steuern. Der Effekt der segmentierten Bestrahlung und Säurebildung wurde durch in der Farbe umschlagende pH-Indikatoren angezeigt. Die klebtechnischen Ausprüfungen zeigten eine deutliche Verbesserung der Eigenschaften hinsichtlich der Scherfestigkeit. Die UV-behandelte Klebemasse zeigte eine deutlich höhere Fließviskosität und eine höhere Glastemperatur T_{G} als die unbehandelte Basismasse, die segmentierten Acrylathaftklebemassen zudem eine deutliche Verbesserung der klebetechnischen Eigenschaften hinsichtlich der Klebkraft und des Tacks.

Die zur Charakterisierung durchgeführten Polymerisationen sind in Tab. 1 zusammengefaßt.

**Tabelle 1**

| Beispiel | t-BuA [%] | 2-EHA [%] | MA [%] | n-BuA [%] |
|---|---|---|---|---|
| 1 | 9 | 81 | 10 | 0 |
| 2 | 5 | 75 | 20 | 0 |
| 3 | 10 | 0 | 0 | 90 |
| t-BuA = tert.-Butylacrylat | | | | |
| 2-EHA = 2-Ethylhexylacrylat | | | | |
| MA = Methylacrylat | | | | |
| n-BuA = n-Butylacrylat | | | | |

Das erreichte Molekulargewicht lag bei den Beispielen 1 - 3 bei etwa 1.000.000. Da diese Polyacrylatklebemassen als Referenz dienen sollen, wurden die Beispiele 1 - 3 klebtechnisch geprüft, insbesondere im Hinblick auf die Scherfestigkeit (s. Tabelle 3). Da Polyacrylatmassen ohne Vernetzung nicht sehr kohäsiv sind, wurde zuvor durch Bestrahlung mit Elektronenstrahlen verschiedener Intensitäten vernetzt. Des weiteren wurden diese Polymermassen durch Dynamisch-Mechanische Analyse untersucht, um die Fließviskositäten miteinander vergleichen zu können.

Um die unpolaren in polarere Massen zu überführen, wurden die Beispiele 1 - 3 mit UV-Kationenerzeugem vermischt. Zur Überprüfung des Konzeptes wurde Beispiel 3 mit verschiedenen Gewichtsmengen Triarylsulfoniumhexafluorophosphat (Cyracure UVI-6990 ® [UNION CARBIDE]) vermengt, auf einen PET-Folienträger ausgestrichen und verschiedenen Dosen an UV-Strahlung ausgesetzt.

Als UV-Quelle diente ein Xenon-Chlorid-Strahler (VIB 308 Bulb [FUSION]) .

**Tabelle 2**

| Beispiel 3 | UV-Photoinitiator [Mol-%] | Belichtungsdauer [sec] | Trocknungsdauer [min] bei 120°C | Umsatz [%] (Nachweis: IR) |
|---|---|---|---|---|
| 3a | 5 | 30 | 10 | 76 |
| 3b | 10 | 30 | 10 | 93 |
| 3c | 15 | 30 | 10 | 98 |
| 3d | 20 | 30 | 10 | 98 |
| 3e | 15 | 6 | 10 | 32 |
| 3f | 15 | 18 | 10 | 46 |
| 3g | 15 | 45 | 10 | 98 |
| 3h | 15 | 60 | 10 | 98 |
| 3i | 15 | 90 | 10 | 98 |
| 3j | 15 | 30 | 30 | 98 |
| 3k | 15 | 30 | 60 | 98 |

Variiert wurden die Menge an Photoinitiator, die Belichtungs- und die Trocknungszeit. Der Umsatz wurde mittels IR-Spektroskopie (Test C) bestimmt. Durch diese Untersuchung wurden die optimalen Reaktionsbedingungen für die tert.-Butylacrylat-Entschützung in Acrylathaftklebemassen ermittelt. Mit 15 Mol-% Photoinitiator Triarylsutfonium-hexafluorophosphat (Cyracure UVI-6990 ® [UNION CARBIDE]) bei einer Belichtungszeit von 30 Sekunden und 10minütigem Temperieren bei 120 °C erreichte man einen Umsatz von 98 %, bezogen auf die Menge tertiären Butylacrylats im Basispolymerisat. Die Umsätze wurden durch IR-Spektroskopie bestimmt. Durch NMR-spektroskopische Messungen konnten diese Resultate bestätigt werden.

Nach der Ermittlung der Reaktionsparameter wurden die Klebemassen 1 - 3 mit 15 Mol-% Photoinitiator Triarylsulfoniumhexafluorophosphat (Cyracure UVI-6990 ® [UNION CARBIDE]) abgemischt, auf einen Trennpapier-Träger aufgestrichen, 30 Sekunden belichtet und 10 Minuten bei 120 °C temperiert. Anschließend wurden die Polymermassen mit Elektronenstrahlung einer Dosis von 100 kGy vernetzt, um die Kohäsion der Klebemassen zu erhöhen. Zur Referenz wurden die Basismassen 1 - 3 ebenfalls auf demselben Trennpapier aufgetragen und mit Elektronenstrahlung einer Dosis von 100 kGy vernetzt. Um den Effekt der UV-Behandlung zu untersuchen, wurden die Haftklebemassen klebtechnisch geprüft. Die Ergebnisse sind in Tabelle 3 dargestellt:

**Tabelle 3**

| Beispiel | SSZ 10 N, RT [min] (Test A1) | SSZ 5 N, 70°C [min] (Test A2) |
|---|---|---|
| 1 | 90 | 15 |
| 2 | 64 | 23 |
| 3 | 88 | 26 |
| 1c | 10000 | 745 |
| 2c | 8732 | 537 |
| 3c | 10000 | 1102 |
| SSZ: Scherstandzeiten | | |

Die Umwandlung der unpolaren Massen 1 - 3 in die UV-behandelten und somit deutlich polareren Acrylatmassen 1c - 3c zeigte einen deutlichen Effekt auf die klebetechnischen Eigenschaften. Durch die Erhöhung des Polyacrylsäureanteils von 0 auf 5 - 10 % stieg die Kohäsion der Acrylathaftklebemassen deutlich an. Die Scherfestigkeit der UV-behandelten Klebebänder stieg bei einem Belastungsgewicht von 1 kg von unter 100 Minuten auf 8.732 (2c) oder 10.000 Minuten (1c, 3c). Dies läßt sich durch die Ausbildung von Wasserstoff-Brückenbindungen der Carbonsäuregruppen erklären. Weiterhin steigt durch die Umwandlung in die polarere Acrylathaftklebemasse die Glasübergangstemperatur (T_{G}) an. Dieser Effekt beeinflußte ebenfalls beide Scherteste. Nach der UV-Behandlung stiegen auch die Wärmescherstandzeiten deutlich an. Die erzielten Werte liegen auf dem Niveau einer sehr scherfesten und kohäsiven Haftklebemasse. Ein weiterer positiver Effekt dieses Prozesses ist die leichte in-situ-Vernetzung. Nach der UV-Behandlug wird für die entschützte Klebemasse ein Gelwert (Gewichtsanteil des Polymers, der in Toluol nicht löslich ist) von 12 % gemessen. Die generierten Carbonsäuregruppen reagieren somit unter UV-Licht und bei Temperierung auf dem Träger miteinander und führen somit zu einer Vorvernetzung. Für die anschließende Elektronenstrahl-Vernetzung wird im Regelfall eine geringere Elektronenstrahl-Dosis benötigt, was wiederum Trägerschädigungen vermeidet.

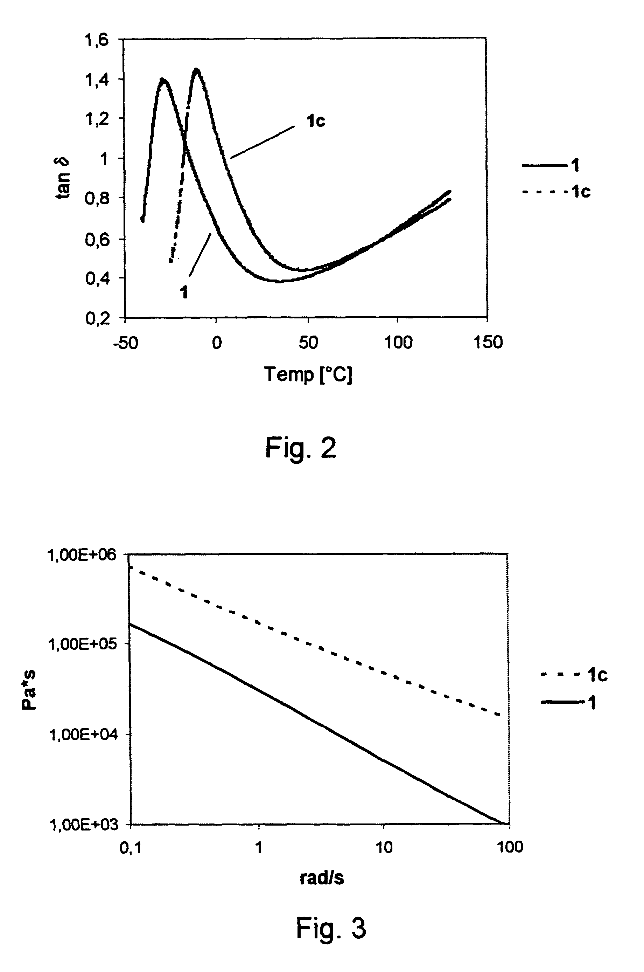

Um die Hotmeltfähigkeit dieses Prozesses nachzuweisen, wurden DMA-Messungen vom Ausgangspolymerisat und vom Endprodukt vor der Elektronenstrahlhärtung durchgeführt. Die Dynamisch-Mechanische Analyse bietet die Möglichkeit, Veränderungen in der Glasübergangstemperatur und in der Fließviskosität zu bestimmen. Es wurden die Massen 1 und 1c durch DMA untersucht und miteinander verglichen (Test B). Die Ergebnisse der Messung zeigt Figur 2.

Die Klebemassen 1 und 1c sind unvernetzt und unterscheiden sich in ihrer dynamischen T_{G}. Die Glasübergangstemperatur von 1 liegt bei -28 °C, während nach der UV Behandlung und Temperierung (1c) die T_{G} auf -5 °C ansteigt. Hierin zeigt sich wiederum der Einfluß der durch UV-Strahlen entstehenden Polyacrylsäure.

Unter Berücksichtigung eines Molekulargewichtes von 1.000.000 und des Einsatzes relativ unpolarer Comonomerer zeigt sich eine sehr gute Extrudierbarkeit für das Ausgangspolymerisat. Durch die geringere Glasübergangstemperatur läßt sich diese Masse im Aufkonzentrationsextruder bei relativ niedrigen Temperaturen und hohem Durchsatz verarbeiten. Durch die niedrigeren Temperaturen wird das Polyacrylat kaum geschädigt, und das mittlere Molekulargewicht bleibt erhalten. Zudem wird eine bei hohen Temperaturen eintretende Vergelung vermieden. Dagegen ist die auf dem Träger generierte polare Klebemasse mit einer Glasübergangstemperatur von -5 °C bedeutend schwerer aufzukonzentrieren. Die in der Klebemasse entstandenen Carbonsäuregruppen bilden Wasserstoff-Brückenbindungen aus, die die Fließviskosität dieses Systems ansteigen lassen. Diese Annahme wurde durch DMA-Messungen bestätigt. Im Figur 3 gezeigten Frequenzsweep wurde bei konstanter Temperatur die Fließviskosität der Klebemassen ermittelt.

Nach der UV-Bestrahlung steigt die Fließviskosität von 1 deutlich an (s. Fig. 3). Dies korrespondiert wiederum mit den zuvor gemessenen Glasübergangstemperatur-Werten. Die Zunahme der inneren Festigkeit durch Ausbildung von Wasserstoff-Brückenbindungen bewirkt ein deutliches Ansteigen der Fließviskosität. Die auf dem Träger generierte Klebemasse würde sich im Extruder nur bei sehr hohen Temperaturen aufkonzentrieren lassen.

Insgesamt eignet sich dieser UV-Prozess besonders gut für die Hotmelt-Technologie zur Herstellung hochviskoser und hochscherfester Acrylathaftklebemassen aus niedrig-viskosen und gut im Aufkonzentrationsextruder verarbeitbaren Basisacrylatmassen.

Die selektive UV-Bestrahlung durch eine Maske wurde in den folgenden Versuchen durchgeführt. Die Anwendbarkeit dieses Prinzips sollte durch einen Farbindikator nachgewiesen werden. Es wurden folgende Acrylathaftklebemassen durch radikalische Polymerisationen hergestellt (Tab. 4):

**Tabelle 4**

| Beispiel | t-BuA [%] | 2-EHA [%] | MA [%] | n-BuA [%] |
|---|---|---|---|---|
| 4 | 9 | 81 | 10 | 0 |
| 5 | 5 | 75 | 20 | 0 |
| t-BuA = tert.-Butylacrylat | | | | |
| 2-EHA = 2-Ethylhexylacrylat | | | | |
| MA = Methylacrylat | | | | |
| n-BuA = n-Butylacrylat | | | | |

Die Polymerisationen wurden analog zu den Proben 1 und 2 konventionell in einem 2 L Glasreaktor, mit Aceton als Lösemittel, mit AIBN [2,2'-Azobis(2-methylbutyronitril)] als Initiator und mit Isopropanol als Regler durchgeführt. Das erreichte Molekulargewicht lag bei den Beispielen 4 und 5 bei etwa 1.000.000.

Anschließend wurden die Beispiele 4 und 5 mit 8 Mol-% Triarylsulfonium-hexafluorophosphat (Cyracure UVI-6990 ® [UNION CARBIDE]) und mit 0,5 % unterschiedlicher Farbindikatoren (Methylrot, Methylenblau) vermischt, auf einen PET-Folienträger ausgestrichen und durch verschiedene Masken mit UV-Licht bestrahlt. Als UV-Quelle diente ein Xenon-Chlorid-Strahler (VIB 308 Bulb [FUSION]). Es konnte festgestellt werden, daß durch die selektive Bestrahlung die Säure an gezielten Stellen erzeugt wird und der Farbindikator durch den veränderten pH-Wert umschlägt.

Zur Bestätigung der Durchführbarkeit wurden folgende Klebemassen im Labormaßstab hergestellt (Tab. 5):

**Tabelle 5**

| Beispiel | t-BuA [%] | 2-EHA [%] | MA [%] | AS [%] |
|---|---|---|---|---|
| 6 | 5 | 87 | 6 | 2 |
| 7 | 10 | 82 | 6 | 2 |
| 8 | 15 | 77 | 6 | 2 |
| t-BuA = tert.-Butylacrylat | | | | |
| 2-EHA = 2-Ethylhexylacrylat | | | | |
| MA = Methylacrylat | | | | |
| n-BuA = n-Butylacrylat | | | | |

Die Polymerisationen wurden konventionell in einem 2 L Glasreaktor, mit Aceton als Lösemittel, mit AIBN [2,2'-Azobis(2-methylbutyronitril)] als Initiator und mit Isopropanol als Regler durchgeführt. Das erreichte Molekulargewicht lag bei den Beispielen 6 - 8 bei etwa 1.000.000. Nach der Polymerisation wurden diese Klebemassen mit 20 Mol-% Triarylsulfoniumhexafluorophosphat (Cyracure UVI-6990 ® [UNION CARBIDE]) abgemischt und auf einem Polyesterträger aufgetragen. Die Haftklebemasse wurde mit einer dünnen, transparenten und silikonisierten Polyesterfolie von oben abgedeckt und eine der oben dargestellten Masken A, B oder C mit unterschiedlichem Durchlaß und unterschiedlicher Strukturierung aufgelegt.

Die Bestrahlung erfolgte in mehreren Zyklen mit UV-Licht (308 nm Wellenlänge). Nach der Temperierung (120 °C) zur Aktivierung der Entschützungsreaktion wurden die Muster durch Elektronenbestrahlung gehärtet und die von oben UV-bestrahlte Seite klebtechnisch ausgeprüft. Zum Vergleich sind die UV-unbestrahlten Referenzen 6 - 8 ebenfalls ausgewertet worden. Die Ergebnisse sind in Tabelle 6 dargestellt:

**Tabelle 6**

| Beispiel^{a} | SSZ 10 N, RT [min] (Test A3) | Rolling ball [mm] (Test D) | KK-Stahl [N/cm] (Test E) |
|---|---|---|---|
| 6 | 2150 | 140 | 4.8 |
| 7 | 3220 | 170 | 4.6 |
| 8 | 5100 | 220 | 4.1 |
| 6A | >10000 | 150 | 4.6 |
| 6B | >10000 | 155 | 4.6 |
| 6C | >10000 | 170 | 4.4 |
| 7C | >10000 | 180 | 4.4 |
| 8C | >10000 | 240 | 4.0 |

| | | | |
|---|---|---|---|
| ^{a}Alle Muster wurden mit 30 kGy Elektronenstrahlung vernetzt. SSZ: Scherstandzeiter KK: Klebkraft | | | |

Bei Raumtemperatur und einem Kilogramm Schergewicht als Meßbedingungen erhielt man für die Referenzmassen 6 - 8 Meßwerte für die Scherstandzeiten in einem Bereich zwischen 2.150 und 5.100 Minuten. Die Klebemasse 8 besitzt die höchste Glasübergangstemperatur und ist demnach am kohäsivsten. Werden diese Muster nun selektiv bestrahlt, so werden harte und Polyacrylsäure-haltige Segmente erzeugt, die die Kohäsion der Haftklebemasse steigern. Alle UV-behandelten Muster hielten länger als 10.000 Minuten im Schertest. Vergleicht man die gemessenen Klebkräfte, so sind die Unterschiede relativ gering. Je nach Glasübergangstemperatur und Anteil tert.-Butylacrylat in der Haftklebemasse sinkt die Klebkraft nur äußerst geringfügig. Die hohen Klebkräfte lassen sich durch die Oberflächentopographie erklären. Die harten Segmente besitzen eine geringere Schichtdicke, so daß eine Art "Saugknopf"-Effekt auftritt, durch den die Klebkräfte im Vergleich zur UV-unbestrahlten Klebemasse auf nahezu gleichem Niveau verbleiben. Gleiches gilt für den Tack der strukturierten Klebemasse. Die Referenzmassen 6 - 8 besitzen durch den variierenden Anteil tert.-Butylacrylat eine unterschiedliche Härte und somit auch eine unterschiedliche Anfaßklebrigkeit (Tack). In der Rolling-Ball-Messung zeigte sich, daß Refenzmasse 8 mit dem höchsten Anteil tert.-Butylacrylat mit 220 mm den geringsten Tack besitzt. Vergleicht man nun mit den bestrahlten Mustern 6C, 7C und 8C, so stellt man fest, daß sich der Tack trotz der höheren Scherfestigkeit kaum verändert. Dies korreliert wiederum mit dem "Saugknopf-Effekt". Mit den Beispielen 6A, 6B und 6C wurde der Einfluß der Siebmaske und damit der in der Haftklebemasse erzeugten Struktur untersucht. Die Masken sind nach UV-Licht-Durchlaß sortiert. Bei 33 % Durchlaß werden zu 33 % harte Polyacrylsäure-haltige Segmente in der Haftklebemasse erzeugt - bei 60 % Durchlaß 60 % harte Segmente. Vergleicht man den Tack dieser drei Massen, so sieht man einen entsprechenden Trend. Je größer der Durchlaß, desto geringer werden der Tack und die Klebkraft auf Stahl. Insgesamt sind die Effekte - im Vergleich zur Referenzmasse 6 - aber sehr gering. Nachdem gezeigt wurde, daß durch die selektive UV-Bestrahlung sich die Scherfestigkeit von tert.-Butylacrylat-haltigen Klebemassen steigern läßt, ohne daß sich die Klebkraft oder der Tack wesentlich verschlechtern, wurde in den folgenden Beispielen der umgekehrte Weg beschritten. Nach der UV-Bestrahlung wurden die Muster gezielt mit Elektronenstrahlen untervernetzt (Verringerung der Dosis von 30 auf 18 kGy), so daß die Scherfestigkeit auf dem Niveau der mit 30 kGy optimal vernetzten Referenzmassen lag. Die Massen 6C", 7C" und 8C" wurden durch eine Maske mit 60% Durchlaß bestrahlt (Tab. 7).

**Tabelle 7**

| Beispiel^{a} | SSZ 10 N, RT [min] (Test A3) | Rolling ball [mm] (Test D) | KK-Stahl [N/cm] (Test E) |
|---|---|---|---|
| 6C" | 2530 | 90 | 6.0 |
| 7C" | 3380 | 110 | 5.6 |
| 8C" | 4890 | 150 | 5.3 |

| | | | |
|---|---|---|---|
| ^{a}Alle Muster wurden mit 18 kGy ESH vernetzt. SSZ: Scherstandzeiten KK: Klebkraft | | | |

Der Vergleich der Klebemassen 6C", 7C" und 8C" mit den Referenzen 6, 7 und 8 zeigt, daß sich die Scherfestigkeiten durch die unterschiedliche Härtung mit Elektronenstrahlen und UV-Licht nicht sehr verändert haben. Ein deutlicher Effekt läßt sich aber in den Klebkraft- und Tack-Messungen erkennen. Bei unveränderter Scherfestigkeit verbessert sich in allen drei Fällen die Klebkraft und der Tack im Vergleich zu den Referenzen.

## Patentansprüche

1. Strukturierte Polyacrylate, erhältlich durch mittels UV-Bestrahlung hervorgerufene Vernetzung einer Polymermischung aus den folgenden Komponenten:
a) Polyacrylatcopolymere aus den folgenden Monomeren
a1) Acrylsäure und/oder Acrylsäureester der folgenden Formel
CH₂ = CH(R¹)(COOR²),
wobei R¹ = H oder CH₃ und R² eine Alkylkette mit 1 - 20 C-Atomen ist,
zu 70 - 99 Gew.-%, bezogen auf Komponente (a),
a2) olefinisch ungesättigte Monomere mit funktionellen Gruppen,
zu 0 - 15 Gew.-%, bezogen auf Komponente (a),
a3) tert.-Butylacrylat, und
zu 1 - 15 Gew.-%, bezogen auf Komponente (a), und
b) einem Photokationenerzeuger.
zu 0,01 - 25 Gew.-%, bezogen auf die Gesamt-Polymermischung,
wobei die Strukturierung der Polyacrylate darin besteht, daß in den Polyacrylaten Bereiche hoher vernetzung neben Bereichen geringer Vernetzung und/oder unvernetzten Bereichen vorliegen.

2. Strukturierte Polyacrylate nach Anspruch 1, **dadurch gekennzeichnet, daß** Komponente (a1) zu 85 - 89 Gew.-%, bezogen auf Komponente (a), und/oder Komponente (a2) zu 4 - 6 Gew.-%, bezogen auf Komponente (a), und/oder Komponente (a3) zu 7 - 9 Gew.-%, bezogen auf Komponente (a), vorliegen.

3. Polyacrylate nach einem der oberen Ansprüche, **dadurch gekennzeichnet, daß** der Polymermischung
c) bis zu 3 Gew.-%, bezogen auf die Gesamt-Polymermischung, eines bi- oder multifunktionellen Vernetzers zugesetzt wird.

4. Verfahren zur Herstellung von strukturierten Polyacrylaten durch strukturierte vernetzung von Polyacrylatmischungen nach einem der oberen Ansprüche, **dadurch gekennzeichnet, daß**
die Basispolymermischung derart mit ultraviolettem Licht bestrahlt wird, daß nur bestimmte Bereiche der Polymermischung der UV-Strahlung ausgesetzt sind.

5. Verfahren zur Herstellung von strukturierten Polyacrylaten durch strukturierte Vernetzung von Polyacrylatmischungen nach einem der oberen Ansprüche, **dadurch gekennzeichnet, daß**
die Basispolymermischung durch eine Lochmaske derart mit ultraviolettem Licht bestrahlt wird, daß nur bestimmte Bereiche der Polymermischung der UV-Strahlung ausgesetzt sind.

6. Verfahren zur Herstellung von strukturierten Polyacrylaten durch strukturierte Vernetzung von Polyacrylatmischungen nach einem der oberen Ansprüche, **dadurch gekennzeichnet, daß**
die Basispolymermischung durch eine Folie, welche in der Fläche Bereiche unterschiedlicher UV-Licht-Durchlässigkeit aufweist, derart mit ultraviolettem Licht bestrahlt wird, daß bestimmte Bereiche der Polymermischung unterschiedlichen Intensitäten der UV-Strahlung ausgesetzt sind.

7. Verwendung des Polyacrylates nach einem der oberen Ansprüche als Haftklebemasse.

8. Verwendung des Polyacrylates nach einem der oberen Ansprüche als Haftklebemasse für ein Klebeband, wobei die Acrylathaftklebemasse als ein- oder doppelseitiger Film auf einer Trägerfolie vorliegt.

## Claims

1. Structured polyacrylates obtainable by crosslinking, induced by UV irradiation, of a polymer mixture comprising the following components:
a) polyacrylate copolymers of the following monomers
a1) acrylic acid and/or acrylic esters of the following formula
CH₂ = CH(R¹)(COOR²),
where R¹ = H or CH₃ and R² is an alkyl chain having 1-20 carbon atoms,
at 70-99% by weight, based on component (a),
a2) olefinically unsaturated monomers containing functional groups,
at 0-15% by weight, based on component (a),
a3) tert-butyl acrylate,
at 1-15% by weight, based on component (a), and
b) a photocationic initiator
at 0.01-25% by weight, based on the overall polymer mixture,
the structuring of the polyacrylates comprising the presence in the polyacrylates of regions of high crosslinking alongside regions of low crosslinking and/or noncrosslinked regions.

2. Structured polyacrylates according to Claim 1, **characterized in that** component (a1) is present at 85-89% by weight, based on component (a), and/or component (a2) is present at 4-6% by weight, based on component (a), and/or component (a3) is present at 7-9% by weight, based on component (a).

3. Polyacrylates according to either of the above claims, **characterized in that**
c) up to 3% by weight, based on the overall polymer mixture, of a difunctional or polyfunctional crosslinker is added to the polymer mixture.

4. Process for preparing structured polyacrylates by structured crosslinking of polyacrylate mixtures in accordance with one of the above claims, **characterized in that** it comprises irradiating the base polymer mixture with ultraviolet light in such a way that only certain regions of the polymer mixture are exposed to the UV radiation.

5. Process for preparing structured polyacrylates by structured crosslinking of polyacrylate mixtures in accordance with one of the above claims, **characterized in that** it comprises irradiating the base polymer mixture with ultraviolet light through a perforated mask in such a way that only certain regions of the polymer mixture are exposed to the UV radiation.

6. Process for preparing structured polyacrylates by structured crosslinking of polyacrylate mixtures in accordance with one of the above claims, **characterized in that** it comprises irradiating the base polymer mixture with ultraviolet light through a film whose two-dimensional extent has regions of different UV light permeability in such a way that certain regions of the polymer mixture are exposed to different intensities of the UV radiation.

7. Use of the polyacrylate according to one of the above claims as a pressure-sensitive adhesive composition.

8. Use of the polyacrylate according to one of the above claims as a pressure-sensitive adhesive composition for an adhesive tape, the acrylic pressure-sensitive adhesive composition being present as a single- or double-sided film on a backing sheet.

## Revendications

1. Polyacrylates structurés, qui peuvent être préparés par une réticulation provoquée par une irradiation aux UV d'un mélange de polymères constitué des composants suivants :
a) copolymères de polyacrylate, obtenus à partir des monomères suivants :
a1) acide acrylique et/ou esters de l'acide acrylique de la formule suivante :
CH₂ = CH(R¹)(COOR²),
où R¹ = H ou CH₃ et R² représente une chaîne alkyle comprenant 1 à 20 atomes de carbone, à raison de 70 à 99% en poids par rapport au composant (a),
a2) monomères oléfiniquement insaturés présentant des groupes fonctionnels, à raison de 0 à 15% en poids par rapport au composant (a),
a3) acrylate de tert-butyle, à raison de 1 à 15% en poids par rapport au composant (a) et
b) un agent de formation de photocations, à raison de 0,01 à 25% en poids par rapport au mélange total de polymères,
la structuration des polyacrylates étant constituée en ce que dans les polyacrylates, des zones de réticulation élevée se trouvent à côté de zones de faible réticulation et/ou non réticulées.

2. Polyacrylates structurés selon la revendication 1, **caractérisés en ce que**
le composant (a1) est présent à raison de 85 à 89% en poids, par rapport au composant (a), et/ou
le composant (a2) à raison de 4 à 6% en poids, par rapport au composant (a) et/ou
le composant (a3) à raison de 7 à 9% en poids, par rapport au composant (a).

3. Polyacrylates selon l'une quelconque des revendications précédentes, **caractérisés en ce qu'**on ajoute au mélange de polymères
c) jusqu'à 3% en poids, par rapport au mélange total de polymères, d'un réticulant difonctionnel ou polyfonctionnel.

4. Procédé pour la fabrication de polyacrylates structurés par une réticulation structurée de mélanges de polyacrylates selon l'une quelconque des revendications précédentes, **caractérisé en ce que** le mélange de polymères de base est irradié par une lumière ultraviolette telle que seules certaines zones du mélange de polymères sont exposées au rayonnement UV.

5. Procédé pour la fabrication de polyacrylates structurés par une réticulation structurée de mélanges de polyacrylates selon l'une quelconque des revendications précédentes, **caractérisé en ce que** le mélange de polymères de base est irradié via un masque à trous avec de la lumière ultraviolette de telle manière que seules certaines zones du mélange de polymères sont exposées au rayonnement UV.

6. Procédé pour la fabrication de polyacrylates structurés par une réticulation structurée de mélanges de polyacrylates selon l'une quelconque des revendications précédentes, **caractérisé en ce que** le mélange de polymères de base est irradié via un film, qui présente dans sa surface des zones avec une perméabilité différente à la lumière UV, avec de la lumière ultraviolette de telle manière que des zones déterminées du mélange de polymères sont soumises à différentes intensités du rayonnement UV.

7. Utilisation du polyacrylate selon l'une quelconque des revendications précédentes comme masse auto-adhésive.

8. Utilisation du polyacrylate selon l'une quelconque des revendications précédentes comme masse auto-adhésive pour une bande adhésive, la masse auto-adhésive d'acrylate se trouvant sous forme d'un film simple face ou double face sur une feuille support.
